# EUROPEAN PATENT APPLICATION

(11) **EP 4 668 904 A1**
(43) Date of publication of application: **24.12.2025**
(21) Application number: 24756505.4
(22) Date of filing: 09.01.2024
(51) Int. Cl.: H04W 52/30, H04W 24/10, H04W 72/231, H04W 72/0457

(54) **TERMINAL, BASE STATION, COMMUNICATION METHOD, AND INTEGRATED CIRCUIT**

(30) Priority: 14.02.2023 JP 2023020716
(71) Applicant: Panasonic Intellectual Property Corporation of America, Torrance, CA 90504 (US)
(72) Inventor: YAMAMOTO, Tetsuya, Kadoma-shi, Osaka 571-0057 (JP); SUZUKI, Hidetoshi, Kadoma-shi, Osaka 571-0057 (JP)
(74) Representative: Grünecker Patent- und Rechtsanwälte PartG mbB
(86) International application number: PCT/JP2024/000148
(87) International publication number: WO 2024/171653

(57) **Abstract**

In the present invention, a signal is appropriately transmitted in an uplink. A terminal according to the present invention is provided with: a control circuit that, in communication in which a plurality of frequency bands are used, determines information related to surplus power of an uplink in a first frequency band of the plurality of frequency bands, on the basis of a transmission waveform of the first frequency band and a transmission waveform of a second frequency band different from the first frequency band of the plurality of frequency bands; and a transmission circuit that transmits the information related to the surplus power.

## Description

### Technical Field

The present disclosure relates to a terminal, a base station, a communication method, and an integrated circuit.

### Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and flexibly provides radio communication in response to a wide variety of needs.

The 3rd Generation Partnership Project (3GPP) as an international standardizing body has been specifying New Radio (NR) as one of 5G radio interfaces.

### Citation List

### Non-Patent Literature

NPL 1
   3GPP TS38.104 V15.18.0, "NR Base Station (BS) radio transmission and reception (Release 15)," September 2022.
NPL 2
   RP-202928, "New WID on NR coverage enhancements," China Telecom, December 2020.
NPL 3
   RP-220937, "Revised WID on Further NR coverage enhancements," China Telecom, March 2022.
NPL 4
   3GPP TS38.211 V17.4.0, "NR Physical channels and modulation (Release 17)," December 2022.
NPL 5
   3GPP TS38.212 V17.4.0, "NR Multiplexing and channel coding (Release 17)," December 2022.
NPL 6
   3GPP TS38.213 V17.4.0, "NR Physical layer procedures for control (Release 17)," December 2022.
NPL 7
   3GPP TS38.214 V17.4.0, "NR Physical layer procedures for data (Release 17)," December 2022.
NPL 8
   3GPP TS38.321 V17.3.0, "NR; Medium Access Control (MAC) protocol specification (Release 17)," December 2022.
NPL 9
   3GPP TS38.133 V17.8.0, "NR; Requirements for support of radio resource management (Release 17)," December 2022.
NPL 10
   3GPP TSG RAN WG1 #111, "RAN1 Chair's Notes"

### Summary of Invention

There is, however, room for consideration on a method for transmitting a signal in the uplink.

A non-limiting exemplary embodiment of the present disclosure facilitates providing a terminal, a base station, a communication method, and an integrated circuit that can appropriately transmit a signal in an uplink.

A terminal according to one exemplary embodiment of the present disclosure includes: control circuitry, which, in operation, determines information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and transmission circuitry, which, in operation, transmits the information on the power headroom.

It should be noted that general or specific embodiments may be implemented as a system, a method, an integrated circuit, a computer program, a storage medium, or any selective combination thereof.

According to an embodiment of the present disclosure, a signal can be appropriately transmitted in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram showing an example of a Power Headroom Report (PHR) Medium Access Control-Control Element (MAC-CE);
FIG. 2 is a diagram showing an example of a Multiple entry PHR MAC-CE;
FIG. 3 is a diagram showing an example of the relationship between a Power Headroom (PH) value and a PH level;
FIG. 4 is a diagram showing an example of the relationship between the PH level and an actual value in units of dB;
FIG. 5 is a diagram showing an example of the relationship between a value of P_{CMAX,f,c} and a transmission power level;
FIG. 6 is a diagram showing an example of the relationship between a transmission power level and an actual value in units of dB;
FIG. 7 is a block diagram showing an exemplary configuration of a part of a base station;
FIG. 8 is a block diagram showing a part of an exemplary configuration of a terminal;
FIG. 9 is a diagram showing an example of a Multiple entry PHR MAC-CE;
FIG. 10 is a diagram showing an example of a Multiple entry PHR MAC-CE;
FIG. 11 is a diagram showing an example of a Multiple entry PHR MAC-CE;
FIG. 12 is a diagram showing an example of a Multiple entry PHR MAC-CE;
FIG. 13 is a diagram showing an example of a Multiple entry PHR MAC-CE;
FIG. 14 is a flowchart showing an exemplary operation of a terminal;
FIG. 15 is a block diagram showing an exemplary configuration of a base station;
FIG. 16 is a block diagram showing an exemplary configuration of a terminal;
FIG. 17 is a diagram showing an exemplary architecture of a 3GPP NR system;
FIG. 18 is a schematic view showing functional split between NG-RAN and 5GC;
FIG. 19 is a sequence diagram of Radio Resource Control (RRC) connection setup/reconfiguration procedure;
FIG. 20 schematically illustrates usage scenarios of enhanced Mobile BroadBand (eMBB), massive Machine Type Communications (mMTC), and Ultra Reliable and Low Latency Communications (URLLC); and
FIG. 21 is a block diagram illustrating an exemplary 5G system architecture for a non-roaming scenario.

### Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as Frequency Range 2 (FR2)) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. For example, in 3GPP Release 17 (for example, referred to as "Rel. 17") and Release 18 (for example, referred to as "Rel. 18"), methods for improving coverage in NR have been studied (see, for example, NPLs 2 and 3).

In NR, a terminal (for example, also referred to as user equipment (UE)) transmits/receives data in accordance with, for example, resource allocation indicated by a layer 1 control signal (for example, Downlink Control Information (DCI)) on a downlink control channel (for example, Physical Downlink Control Channel (PDCCH)) from a base station (for example, also referred to as gNB) or Radio Resource Control (RRC) that is layer 3 (for example, see NPLs 4 to 7).

In the uplink (Uplink (UL)), for example, a terminal transmits an uplink data channel (for example, Physical Uplink Shared Channel (PUSCH)) in accordance with a resource allocation from a base station (for example, Grant or UL grant).

### [Transmission Waveform for PUSCH]

In NR, Discrete Fourier Transform-spread-Orthogonal Frequency Division Multiplexing (DFT-s-OFDM) and Cyclic Prefix-OFDM (CP-OFDM) are supported as transmission waveforms for the PUSCH.

The DFT-s-OFDM achieves a low peak-to-average power ratio (PAPR) of a transmission signal and high power utilization efficiency as compared with the CP-OFDM, and thus is a transmission waveform capable of ensuring wide uplink coverage. In addition, since the CP-OFDM has high affinity with multiple-input multiple-output (MIMO), the CP-OFDM is an effective transmission waveform for high-efficiency transmission (for example, multi-rank or multi-layer transmission in spatial multiplexing) in an environment of high received quality (for example, signal-to-interference and noise power ratio (SNR)).

In NR up to Rel. 17, the transmission waveform for the PUSCH is semi-statically configured by the RRC (for example, see NPL 7).

For example, the transmission waveform for the Message 3 (Msg.3) PUSCH of in a 4-step random access procedure is determined based on a parameter "msg3-transformPrecoder" configured by the RRC.

In addition, for example, the transmission waveform for the Message A (Msg.A) PUSCH of in a 2-step random access procedure is determined based on a parameter "msgA-transformPrecoder" configured by the RRC. In a case where msgA-transformPrecoder is not configured by the RRC, the transmission waveform for the Msg.A PUSCH may be determined based on msg3-transformPrecoder.

Further, for example, the transmission waveform for the PUSCH dynamically scheduled by the DCI format 0-0 (for example, dynamic grant-PUSCH (DG-PUSCH)) is determined based on the parameter "msg3-transformPrecoder" configured by the RRC.

Further, for example, the transmission waveform for the PUSCH (for example, DG-PUSCH) dynamically scheduled by the DCI format 0-1 or the DCI format 0-2 is determined based on a parameter "transformPrecoder" included in a pusch-Config information element (IE) configured by the RRC. In a case where transformPrecoder is not configured by the RRC, the transmission waveform for the PUSCH dynamically scheduled by the DCI format 0-1 or the DCI format 0-2 may be determined based on msg3-transformPrecoder.

Further, for example, the transmission waveform for the PUSCH (for example, configured grant-PUSCH (CG-PUSCH)) transmitted based on resource allocation indicated by the RRC, which is Layer 3, or semi-persistent resource allocation by activation DCI is determined based on the parameter "transformPrecoder" included in the configuredGrantConfig IE configured by the RRC. In a case where the transformPrecoder is not configured by the RRC, the transmission waveform for the CG-PUSCH may be determined based on the msg3-transformPrecoder.

### [Uplink Transmit Power Control]

In NR, the terminal feeds back a power headroom report (PHR) including information on power headroom (PH) in an uplink to the base station. The base station may dynamically control the uplink resource allocation and transmission power for the terminal, for example, based on the PHR.

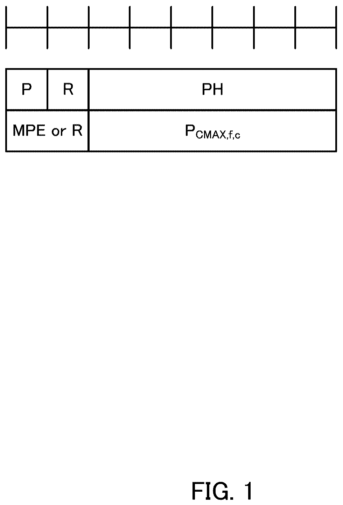

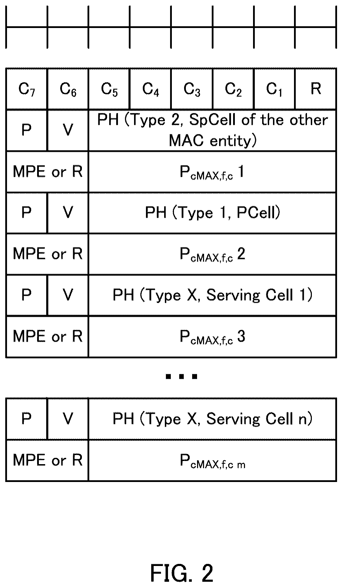

The information on the PH in NR is reported by, for example, the medium access control-control element (MAC-CE) shown in FIG. 1 or FIG. 2 (for example, see NPL 8).

FIG. 1 shows an example of a single entry PHR MAC-CE, which is one type of MAC-CE.

In FIG. 1, "R" indicates a reserved bit (for example, 1 bit).

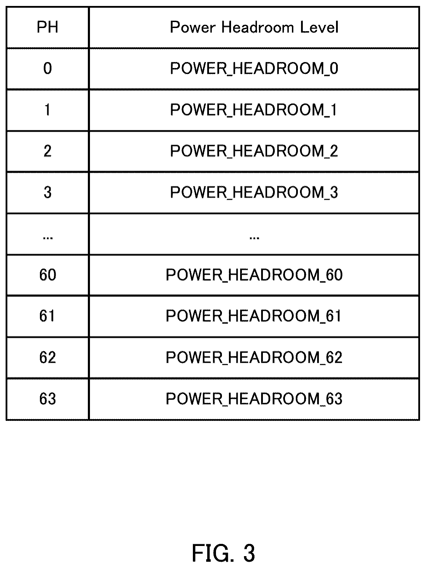

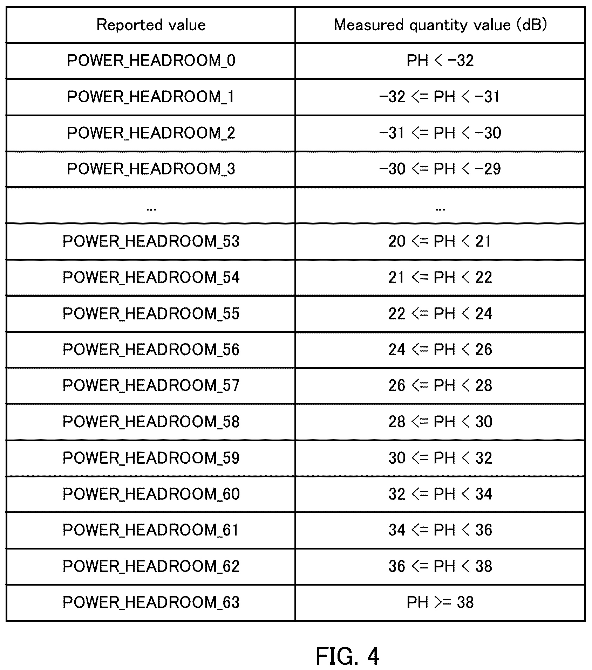

In addition, in FIG. 1, "PH" indicates the uplink power headroom, and a field size is 6 bits. A relationship between the value of PH shown in FIG. 1 and the PH level corresponding to the value of PH is given by, for example, FIG. 3 (for example, see NPL 8). In addition, a relationship between each PH level shown in FIG. 3 and an actual value in units of dB is given by, for example, FIG. 4 (for example, see NPL 9).

In addition, in FIG. 1, "P" indicates a field (for example, 1 bit) which, in FR1, indicates whether or not power backoff is applied for power control, and in FR2, indicates a field (for example, 1 bit) indicating whether or not a value of the power management-maximum power reduction (P-MPR) to be applied is smaller than a threshold (for example, "P-MPR_00").

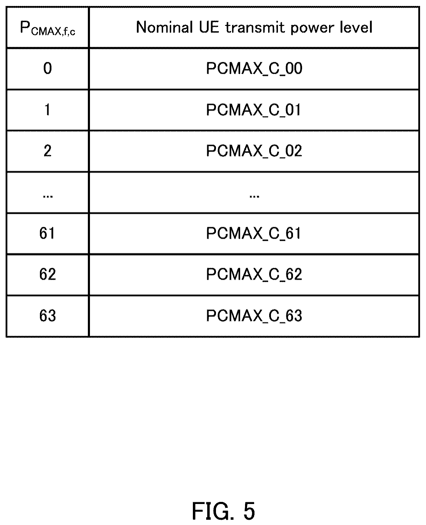

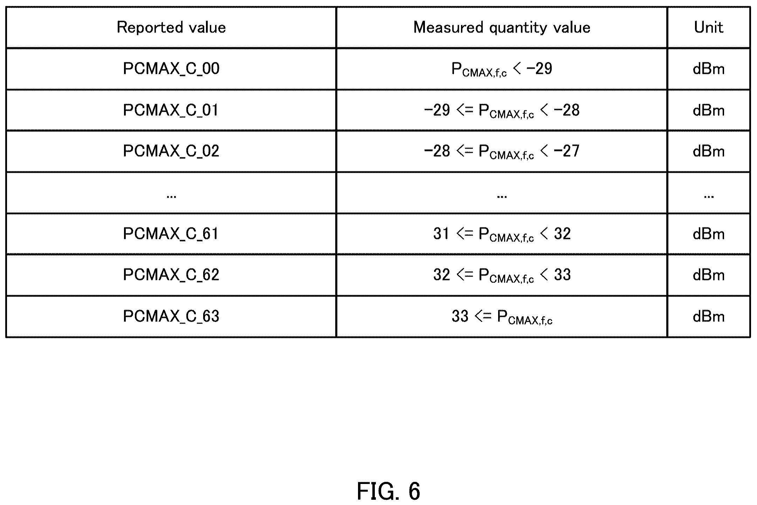

In addition, in FIG. 1, "P_{CMAX,f,c}" indicates the maximum transmission power P_{CMAX,f,c} of the terminal used to calculate the value of the PH included in the PHR, and the field size is 6 bits. A relationship between the value of P_{CMAX,f,c} shown in FIG. 1 and a corresponding transmission power level is given by, for example, FIG. 5 (for example, see NPL 8). In addition, a relationship between each transmission power level shown in FIG. 5 and the actual value in units of dB is given by, for example, FIG. 6 (for example, see NPL 9).

In FIG. 1, "MPE" indicates a field (for example, 2 bits) indicating a transmission power backoff value for satisfying a requirement of maximum permissible exposure (MPE) in FR2.

FIG. 2 shows an example of a Multiple entry PHR MAC-CE, which is one type of MAC-CE.

In FIG. 2, "Cᵢ" denotes a field (for example, one bit for each serving cell) indicating whether or not a field including information on PH for the serving cell of ServingCellIndex i exists.

In addition, in FIG. 2, "R" indicates a reserved bit (for example, 1 bit). Also, in FIG. 2, "V" denotes a field that indicates which of real transmission and a reference format the value of PH is based on.

In addition, in FIG. 2, "PH" indicates the uplink power headroom, and a field size is 6 bits. A relationship between the value of PH shown in FIG. 2 and the PH level corresponding to the value of PH is given by, for example, FIG. 3 (for example, see NPL 8). In addition, a relationship between each PH level shown in FIG. 3 and an actual value in units of dB is given by, for example, FIG. 4 (for example, see NPL 9).

Also, in FIG. 2, "P" in FR1 indicates a field (for example, 1 bit) indicating whether or not to apply power backoff for power control, and in FR2, a field (for example, 1 bit) indicating whether or not the applied P-MPR value is smaller than a threshold (for example, "P-MPR_00")

Further, in FIG. 2, "P_{CMAX,f,c}" indicates the maximum transmission power P_{CMAX,f,c} of the terminal used for calculating the value of PH included in the PHR, and the field size is 6 bits. A relationship between the value of P_{CMAX,f,c} shown in FIG. 2 and a corresponding transmission power level is given by, for example, FIG. 5 (for example, see NPL 8). In addition, a relationship between each transmission power level shown in FIG. 5 and the actual value in units of dB is given by, for example, FIG. 6 (for example, see NPL 9).

In FIG. 2, "MPE" indicates a field (for example, 2 bits) indicating a transmission power back-off value for satisfying the MPE requirement in FR2.

The uplink transmission control (for example, PHR) has been described above.

In a general cellular system, an operation is assumed in which coverage is ensured by configuring DFT-s-OFDM for a terminal at a cell edge where an improvement in uplink coverage is expected.

However, there may be a situation in which even the terminal at the cell edge transmits the PUSCH while high received quality (for example, signal-to-interference noise ratio (SINR)) is ensured due to instantaneous fluctuations in a channel or interference environment. In such a case, when the transmission waveform is a semi-static configuration (for example, when there is a constraint on the configuration), it is difficult for the terminal at the cell edge, in which the transmission waveform is configured as DFT-s-OFDM, to switch the transmission waveform to CP-OFDM in accordance with an instantaneous fluctuation in the channel or interference environment and to perform high-efficiency transmission (for example, multi-layer transmission by MIMO spatial multiplexing or the like), and thus, it is not possible to improve the transmission efficiency of the cell edge terminal.

In addition, in a terminal for which the transmission waveform is configured as CP-OFDM, when coverage is significantly reduced due to instantaneous fluctuations in the channel or interference environment, there may be a situation in which the terminal switches to DFT-s-OFDM to transmit the PUSCH with improved power efficiency. In such a case, when the transmission waveform is configured semi-statically, the terminal for which the transmission waveform is configured as CP-OFDM may find it difficult to improve power efficiency by switching the transmission waveform to DFT-s-OFDM in response to instantaneous fluctuations in the channel or interference environment.

Therefore, in NR of Rel. 18, it has been studied to dynamically switch the transmission waveform for the PUSCH by indication of the DCI (dynamic transmission waveform switching) (for example, see NPL 3). In the following, dynamic transmission waveform switching may be referred to as "dynamic waveform switching (DWS)."

Since the power utilization efficiency differs between the DFT-s-OFDM and the CP-OFDM, it is desirable to appropriately control the uplink transmission power in addition to the transmission waveform for the terminal in order to appropriately switch the transmission waveform for the terminal. In dynamic transmission waveform switching, in order for a base station to appropriately control the transmission waveform and the uplink transmission power for a terminal, it may be assumed to use information on the uplink power headroom of a transmission waveform that is a candidate for dynamic switching (hereinafter also referred to as a "target waveform"), for example, in addition to information on the uplink power headroom for the transmission waveform currently configured for the terminal.

For example, in the existing PHR, the terminal feeds back the information on the uplink power headroom for the transmission waveform currently configured for the terminal, but does not feed back the information on the uplink power headroom for the transmission waveform that is the candidate for the dynamic switching.

Therefore, it has been studied to feedback the information (for example, the value of P_{CMAX,f,c}) on the power headroom for the transmission waveform that is not currently configured for the terminal (for example, the transmission waveform (target waveform) that is the candidate for the dynamic switching) (for example, see NPL 10).

In NR, carrier aggregation (CA) or dual connectivity (DC) in which the terminal can perform transmission and reception simultaneously in a plurality of component carriers (CC) or a plurality of cells is supported. Hereinafter, the carrier aggregation (CA) and the dual connectivity may be collectively referred to as "CA/DC" for convenience.

Since the maximum transmission power is limited for the terminal in the uplink of the general cellular system, it is assumed that CA/DC is not suitable for uplink transmission of the terminal in many cases at the cell edge, for example, while CA/DC is applied in many cases at a cell center where a communication distance between the base station and the terminal is short.

In addition, it is assumed that the dynamic transmission waveform switching is easily applied near a boundary between the cell edge where improvement of the uplink coverage is important and the cell center where high SINR can be ensured.

Therefore, it is expected to consider supporting the dynamic transmission waveform switching in a case where CA/DC is applied.

For example, in a case where CA/DC is applied for the terminal and a plurality of carriers or cells are configured, the multiple entry PHR MAC-CE shown in FIG. 2 may be used for the feedback of the information on the uplink power headroom, but the existing PHR MAC-CE does not take into consideration the dynamic transmission waveform switching.

For example, for a carrier or a cell to which the dynamic transmission waveform switching (DWS) is applied (hereinafter, also referred to as a "DWS configured carrier or cell"), it is assumed that the information on the remaining transmission power for the transmission waveform (target waveform) which is not currently configured for the terminal is fed back, for example, as described above. In addition, in a case where a carrier or a cell to which the dynamic transmission waveform switching is not applied in CA/DC shares a radio frequency (RF) amplifier with a DWS configured carrier or cell, switching of the transmission waveform in the DWS configured carrier or cell may cause a difference in uplink power headroom even in the carrier or cell to which the dynamic transmission waveform switching is not applied in CA/DC. Therefore, there is room for study on a method of feeding back the information on the uplink power headroom in a case where the DWS is applied in a scenario where CA/DC is applied.

In one non-limiting exemplary embodiment of the present disclosure, a method of determining information on the power headroom in the uplink in the dynamic transmission waveform switching in the uplink in a scenario where CA/DC is applied will be described.

In one non-limiting exemplary embodiment of the present disclosure, the terminal appropriately feeds back the information on the power headroom to the base station, taking into consideration the transmission waveform of another carrier or cell in addition to the transmission waveform of the carrier or the cell configured for the terminal in the dynamic transmission waveform switching in the uplink, and the base station performs uplink scheduling for the terminal using the feedback information.

Hereinafter, a non-limiting embodiment of the present disclosure will be described.

### [Overview of Communication System]

A communication system according to each embodiment of the present disclosure includes, for example, at least one base station and at least one terminal.

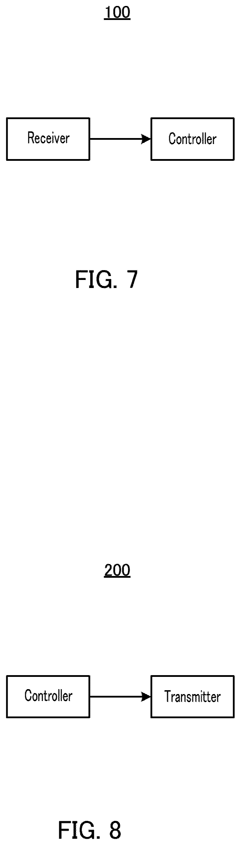

FIG. 7 is a block diagram showing an exemplary configuration of a part of base station 100 according to an exemplary embodiment of the present disclosure, and FIG. 8 is a block diagram showing an exemplary configuration of a part of terminal 200 according to an exemplary embodiment of the present disclosure.

In base station 100 shown in FIG. 7, a receiver (for example, corresponding to reception circuitry) receives information (for example, PH) on power headroom in an uplink for a first frequency band among a plurality of frequency bands (for example, carriers or cells) in communication (for example, CA/DC) using the plurality of frequency bands, the information being determined based on a transmission waveform for the first frequency band among the plurality of frequency bands and a transmission waveform for a second frequency band among the plurality of frequency bands that is different from the first frequency band. A controller (for example, corresponding to control circuitry) controls uplink transmission (for example, uplink resource allocation or uplink transmission power) based on the information on the power headroom.

In terminal 200 shown in FIG. 8, a controller (for example, corresponding to control circuitry) determines information (for example, PH) on power headroom in an uplink for a first frequency band among a plurality of frequency bands (for example, carriers or cells) in communication (for example, CA/DC) using the plurality of frequency bands, based on a transmission waveform for the first frequency band and a transmission waveform for a second frequency band of the plurality of frequency bands that is different from the first frequency band. A transmitter (for example, corresponding to transmission circuitry) transmits the information on the power headroom.

### (Embodiment 1)

In the present embodiment, a plurality of carriers or cells (for example, a plurality of frequency bands) are configured for terminal 200. Terminal 200 feeds back, for example, information on uplink power headroom (or remaining transmission power) for the plurality of configured carriers or cells.

In the present embodiment, for example, in feedback of the information on the uplink power headroom of the carrier or the cell for which DWS is configured (or applied) (DWS configured carrier or cell), terminal 200 determines information on uplink power headroom corresponding to a transmission waveform (hereinafter, also referred to as a "current waveform") that is currently configured for the DWS configured carrier or cell, and information (for example, the value of P_{CMAX,f,c}) on uplink power headroom corresponding to a transmission waveform (target waveform) that is not currently configured for the DWS configured carrier or cell, and feeds back the information.

In this case, terminal 200 may calculate (or determine) the information on the uplink power headroom of the DWS configured carrier or cell based on one of the following assumptions on transmission (for example, PUSCH transmission) of a signal in another carrier or cell (for example, a carrier or a cell for which DWS is not configured (or applied)).

### <Assumption 1 on Another Carrier Or Cell in DWS Configured Carrier Or Cell>

In the carrier or the cell where DWS is not configured, terminal 200 may assume that the PUSCH is transmitted based on the transmission waveform that is currently configured for the carrier or the cell.

For configuration of other parameters different from the transmission waveform, such as resource allocation or modulation and coding scheme (MCS) of the PUSCH, configuration actually allocated to the PUSCH (for example, actual PUSCH transmission) may be used, or the reference format may be used.

### <Assumption 2 on Another Carrier Or Cell in DWS Configured Carrier Or Cell>

Terminal 200 may assume that the PUSCH is not transmitted in the carrier or the cell where DWS is not configured.

The assumption on the carrier or the cell where the DWS is not configured has been described above.

In addition, for example, for the feedback of the information on the uplink power headroom of the carrier or the cell where the DWS is not configured, terminal 200 determines information (for example, the value of P_{CMAX,f,c}) on power headroom (or assumed power headroom) corresponding to the transmission waveform (current waveform) that is currently configured for the carrier or the cell, and feeds back the information.

In this case, terminal 200 may calculate the information on the uplink power headroom of the carrier or the cell where the DWS is not configured, by assuming that the PUSCH is transmitted by applying a "reference transmission waveform" in the DWS configured carrier or cell.

Any of the following may be applied to the reference transmission waveform.

### <Option 1 Related to Reference Transmission Waveform>

In Option 1, the transmission waveform (current waveform) that is currently configured for the DWS configured carrier or cell may be configured as the reference transmission waveform.

For example, in the DWS configured carrier or cell, terminal 200 may determine the information on the uplink power headroom of the carrier or the cell where the DWS is not configured, by assuming that the PUSCH is transmitted by using the transmission waveform (current waveform) that is currently configured for the carrier or the cell.

### <Option 2 Related to Reference Transmission Waveform>

In Option 2, a transmission waveform (for example, target waveform) that is not currently configured for the DWS configured carrier or cell may be configured as the reference transmission waveform.

For example, in the DWS configured carrier or cell, terminal 200 may determine the information on the uplink power headroom of the carrier or the cell where the DWS is not configured, by assuming that the PUSCH is transmitted by using the transmission waveform (target waveform) that is not currently configured for the carrier or the cell.

### <Option 3 Related to Reference Transmission Waveform>

The reference transmission waveform may be determined in advance by the standard, may be semi-statically configured for terminal 200 by higher layer signaling such as the RRC, or may be dynamically configured for terminal 200 by the DCI or the like.

An example of the reference transmission waveform has been described above.

According to the present embodiment, when terminal 200 reports the information on the uplink power headroom, not only the configuration related to the transmission waveform for the DWS configured carrier or cell, but also the configuration related to the transmission waveform for the other carrier or cell is determined, so that base station 100 can obtain the information on the remaining transmission power of terminal 200 taking into consideration the transmission waveform for the other carrier or cell. As a result, base station 100 can perform appropriate scheduling for terminal 200 in a case where the DWS is configured in the CA/DC scenario.

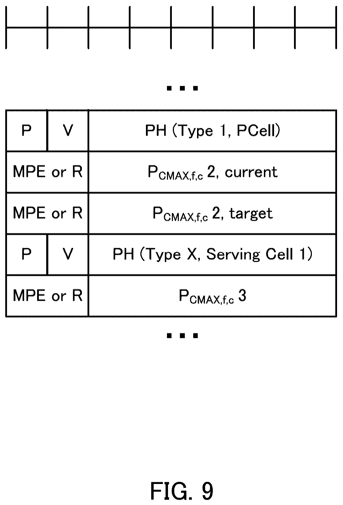

FIG. 9 shows an example of a part of the multiple PHR MAC-CE according to the present embodiment.

FIG. 9 shows an example of a case where the DWS is configured for a primary cell (PCell) and the DWS is not configured for serving cell 1. That is, in FIG. 9, the PCell corresponds to the "DWS configured carrier or cell," and serving cell 1 corresponds to the "carrier or cell where DWS is not configured."

As shown in FIG. 9, the information on the uplink power headroom of the PCell (for example, fields in rows 1 to 3 in FIG. 9) includes information (P_{CMAX,f,c,2,target waveform}) (in FIG. 9, "P_{CMAX,f,c}2, target") on the uplink power headroom for the transmission waveform (target waveform) that is not currently configured for the PCell, in addition to information (P_{CMAX,f,c,2,current waveform}) (in FIG. 9, "P_{CMAX,f,c}2, current") on the uplink power headroom for the transmission waveform (current waveform) that is currently configured for the PCell.

In a case where terminal 200 calculates the information on the power headroom for each of the current waveform and the target waveform for the PCell, for example, any of the above assumptions (for example, either Assumption 1 or Assumption 2) may be applied to serving cell 1.

In addition, as shown in FIG. 9, the information on the uplink power headroom of serving cell 1 (for example, fields in rows 4 and 5 in FIG. 9) includes information (P_{CMAX,f,c,3}) (in FIG. 9, "P_{CMAX,f,c}3") on the uplink remaining transmission power for the transmission waveform (current waveform) that is currently configured for serving cell 1.

In a case where terminal 200 calculates the information on the power headroom of the current waveform for serving cell 1, for example, it may be assumed that the PUSCH is transmitted by applying the reference transmission waveform in the PCell.

As described above, in the present embodiment, terminal 200 determines, in CA/DC, the information on the uplink power headroom in a carrier or cell among a plurality of carriers or cells based on the transmission waveform of the carrier or the cell and the transmission waveform of another carrier or cell among the plurality of carriers or cells that is different from the carrier or the cell. As a result, in the dynamic transmission waveform switching in the uplink in the scenario in which CA/DC is applied, terminal 200 can appropriately determine the information on the uplink power headroom for each carrier or cell, taking into consideration the transmission waveform for each of the plurality of carriers or cells to which CA/DC is applied. In addition, base station 100 can perform appropriate scheduling in the uplink for terminal 200 by taking into consideration the transmission waveform for each of the plurality of carriers or cells to which CA/DC is applied, using the feedback information.

Therefore, according to the present embodiment, terminal 200 can appropriately transmit the signal in the uplink.

### (Variation 1)

In the above-described embodiment, a case where the information on the uplink power headroom of the DWS configured carrier or cell includes the information on the uplink power headroom for the transmission waveform (current waveform) that is currently configured for the DWS configured carrier or cell and the information on the power headroom for the transmission waveform (target waveform) that is not currently configured for the DWS configured carrier or cell has been described. In addition, in the above-described embodiment, a case where either Assumption 1 or Assumption 2 is applied to the other carrier or cell for calculation of the information on the uplink power headroom of the DWS configured carrier or cell has been described.

In Variation 1, for calculation of the information on the power headroom corresponding to each of the current waveform and the target waveform for the DWS configured carrier or cell, the present invention is not limited to the case where one of the above-described assumptions (for example, Assumption 1 and Assumption 2) is used for the other carrier or cell, and the information on the power headroom in each of a plurality of assumptions may be included.

Alternatively, for example, the information on the power headroom in each of the plurality of assumptions may be included in any one of the information on the uplink power headroom corresponding to the current waveform for the DWS configured carrier or cell or the information on the remaining transmission power corresponding to the target waveform for the DWS configured carrier or cell.

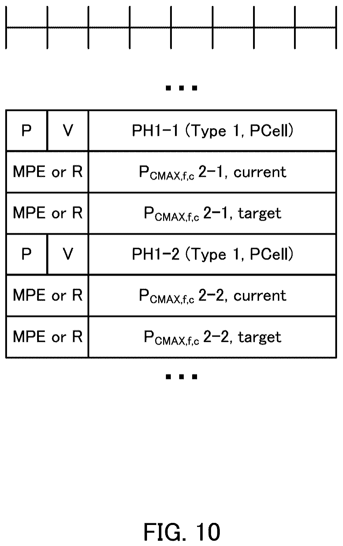

FIG. 10 shows an example of a part of the multiple PHR MAC-CE in Variation 1.

FIG. 10 shows an example of a case where the DWS is configured for the PCell. That is, in FIG. 10, the PCell corresponds to the "DWS configured carrier or cell."

As shown in FIG. 10, the information on the uplink power headroom of the PCell (for example, fields in rows 1 to 3 in FIG. 10) includes information (P_{CMAX,f,c,2-1,target waveform}) (in FIG. 10, "P_{CMAX,f,c}2-1, target") on the power headroom for the transmission waveform (target waveform) that is not currently configured for the PCell, in addition to information (P_{CMAX,f,c,2-1,current waveform}) (in FIG. 10, "P_{CMAX,f,c}2-1, current") on the uplink power headroom for the transmission waveform (current waveform) that is currently configured for the PCell. In a case where terminal 200 calculates these pieces of information on the power headroom in the PCell, for example, Assumption 1 (the assumption that the PUSCH is transmitted by using the transmission waveform that is currently configured for the other carrier or cell (carrier or cell where DWS is not configured)) may be applied in the other carrier or cell.

In addition, as shown in FIG. 10, the information on the uplink power headroom of the PCell (for example, fields in rows 4 to 6 in FIG. 10) includes information (P_{CMAX,f,c,2-2,target waveform}) (in FIG. 10, "P_{CMAX,f,c}2-2, target") on the power headroom for the transmission waveform (target waveform) that is not currently configured for the PCell, in addition to information (P_{CMAX,f,c,2-2,current waveform}) (in FIG. 10, "P_{CMAX,f,c}2-2, current") on the uplink power headroom for the transmission waveform (current waveform) that is currently configured for the PCell. In a case where terminal 200 calculates these pieces of information on the power headroom in the PCell, for example, Assumption 2 (the assumption that the PUSCH is not transmitted in the other carrier or cell (carrier or cell where DWS is not configured)) may be applied in the other carrier or cell.

As is understood, in FIG. 9, the information on the power headroom corresponding to the current waveform for the PCell includes P_{CMAX,f,c,2-1,current waveform} corresponding to Assumption 1 and P_{CMAX,f,c,2-2,current waveform} corresponding to Assumption 2. Similarly, in FIG. 9, the information on the power headroom corresponding to the target waveform for the PCell includes P_{CMAX,f,c,2-1,target waveform} corresponding to Assumption 1 and P_{CMAX,f,c,2-2,target waveform} corresponding to Assumption 2.

According to Variation 1, terminal 200 can report the uplink remaining transmission power of the DWS configured carrier or cell assuming both a case where the PUSCH is actually transmitted and a case where the PUSCH is not transmitted in the other carrier or cell (carrier or cell where DWS is not configured). As a result, base station 100 can perform the scheduling in the uplink for terminal 200 by taking into consideration a plurality of assumptions of the carrier or the cell where the DWS is not configured.

### (Variation 2)

In the above-described embodiment, the case where the information on the uplink power headroom of the DWS configured carrier or cell includes the information on the uplink power headroom for the transmission waveform (current waveform) that is currently configured for the DWS configured carrier or cell and the information on the power headroom for the transmission waveform (target waveform) that is not currently configured for the DWS configured carrier or cell has been described. In addition, in the above-described embodiment, the case where either Assumption 1 or Assumption 2 is applied to the other carrier or cell for calculation of the information on the uplink power headroom of the DWS configured carrier or cell has been described.

In Variation 2, in a case where terminal 200 calculates the information on the power headroom corresponding to each of the current waveform and the target waveform for the DWS configured carrier or cell, any of the above-described assumptions (for example, Assumption 1 and Assumption 2) may be applied as the assumption for the other carrier or cell (for example, a carrier or a cell to which DWS is not applied) for each other carrier or cell (or individually for the other carrier or cell).

Terminal 200 may individually determine any one of Assumption 1 (for example, the assumption that the PUSCH is transmitted based on the transmission waveform configured for the other carrier or cell) and Assumption 2 (for example, the assumption that the PUSCH is not transmitted in the other carrier or cell) in each of a plurality of carriers or cells where the DWS is not configured.

For example, which assumption is applied to each carrier or cell may be indicated from terminal 200 to base station 100 by a field in the PHR MAC-CE, may be configured for terminal 200 by higher layer signaling such as the RRC from base station 100, or may be configured for terminal 200 by the DCI from base station 100.

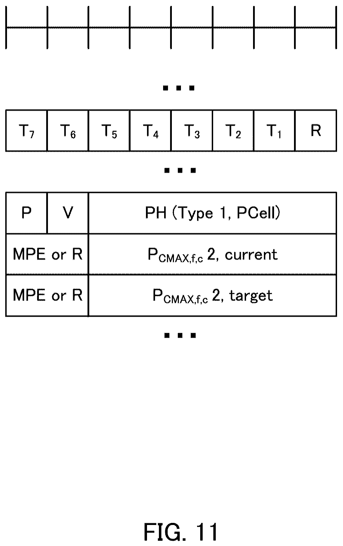

FIG. 11 shows an example of a part of the multiple PHR MAC-CE in Variation 2.

FIG. 11 shows an example of a case where the DWS is configured for the PCell. That is, in FIG. 11, the PCell corresponds to the "DWS configured carrier or cell."

As shown in FIG. 11, the information on the uplink power headroom of the PCell (for example, fields in rows 2 to 4 in FIG. 11) includes information (P_{CMAX,fc,2,target waveform}) (in FIG. 11, "P_{CMAX,f,c}2, target") on the power headroom for the transmission waveform (target waveform) that is not currently configured for the PCell, in addition to information (P_{CMAX,f,c,2,current waveform}) (in FIG. 11, "P_{CMAX,f,c}2, current") on the uplink remaining transmission power for the transmission waveform (current waveform) that is currently configured for the PCell.

In a case where terminal 200 calculates the information on the power headroom for each of the current waveform and the target waveform for the PCell, for example, any one of Assumption 1 and Assumption 2 may be individually applied to each of the other carriers or cells (carriers or cells to which DWS is not applied).

In a case where the information on which assumption is applied to each of the other carriers or cells is indicated by a field in the PHR MAC-CE, the field (field in row 1 in FIG. 11) related to the indication may be included in the PHR MAC-CE. For example, "Tᵢ" in FIG. 11 indicates a field (for example, 1 bit for each serving cell) indicating which of Assumption 1 and Assumption 2 is applied to the serving cell (an example of the other carrier or cell) of servingCellIndex i.

According to Variation 2, in the other carriers or cells (carriers or cells for which DWS is not configured), terminal 200 can flexibly switch between actually transmitting a PUSCH (for example, assumption 1) and not transmitting a PUSCH (for example, assumption 1) depending on the situation of each cell. As a result, base station 100 can perform the scheduling in the uplink for terminal 200 by taking into consideration the assumption of the PUSCH transmission in each of the carriers or cells where the DWS is not configured.

In Variation 2, the case where any one of Assumption 1 and Assumption 2 can be variably applied to each of the plurality of other carriers or cells has been described, but the present invention is not limited to this, and, for example, any one of a plurality of assumptions may be variably applied on a basis of a group including at least one of the other carriers or cells, or any one of a plurality of assumptions may be variably applied in units of all the other carriers or cells.

### (Variation 3)

In the present embodiment, a plurality of DWS configured carriers or cells may be present.

In this case, for the feedback of the information on the uplink power headroom of the DWS configured carrier or cell, terminal 200 feeds back the information on the remaining transmission power (for example, the value of P_{CMAX,f,c}) for the transmission waveform (target waveform) that is not currently configured for the DWS configured carrier or cell, in addition to the information on the uplink power headroom for the transmission waveform (current waveform) that is currently configured for the DWS configured carrier or cell.

In this case, terminal 200 may calculate the information on the uplink power headroom of one DWS configured carrier or cell among the plurality of DWS configured carriers or cells by assuming that the PUSCH is transmitted by applying the reference transmission waveform in another DWS configured carrier or cell among the plurality of DWS configured carriers or cells.

Any of Options 1 to 3 described above may be applied to the reference transmission waveform, a plurality of pieces of information on the remaining transmission power may be reported assuming both Option 1 and Option 2, or which of Option 1 and Option 2 is assumed may be individually configured for each cell.

In addition, for calculation of the information on the power headroom for each of the current waveform and the target waveform for the DWS configured carrier or cell, any of the methods of above-described Embodiment 1, Variation 1, and Variation 2 may be applied for the assumption for the other carrier or cell (carrier or cell to which DWS is not applied).

According to Variation 3, terminal 200 can feed back the information on the power headroom corresponding to a situation of the plurality of DWS configured carriers or cells to base station 100. As a result, base station 100 can perform the scheduling in the uplink for terminal 200 by taking into consideration the transmission waveform for each of the DWS configured carriers/cells.

### (Embodiment 2)

In the present embodiment, a plurality of carriers or cells (for example, a plurality of frequency bands) are configured for terminal 200. Terminal 200 feeds back, for example, information on uplink power headroom in the plurality of configured carriers or cells.

In the present embodiment, for example, in feedback of the information on the uplink power headroom of the carrier or the cell for which DWS is configured (or applied) (DWS configured carrier or cell), terminal 200 determines information on uplink power headroom corresponding to a transmission waveform (hereinafter, also referred to as a "current waveform") that is currently configured for the DWS configured carrier or cell, and information (for example, the value of P_{CMAX,f,c}) on uplink power headroom corresponding to a transmission waveform (target waveform) that is not currently configured for the DWS configured carrier or cell, and feeds back the information.

In this case, terminal 200 may calculate (or determine) the information on the uplink power headroom of the DWS configured carrier or cell by applying one of the following assumptions on transmission (for example, PUSCH transmission) of a signal in another carrier or cell (for example, a carrier or a cell for which DWS is not configured (or applied)).

### <Assumption 1 on Another Carrier Or Cell in DWS Configured Carrier Or Cell>

In the carrier or the cell where DWS is not configured, terminal 200 may assume that the PUSCH is transmitted based on the transmission waveform that is currently configured for the carrier or the cell.

For configuration of other parameters different from the transmission waveform, such as resource allocation or modulation and coding scheme (MCS) of the PUSCH, configuration actually allocated to the PUSCH (for example, actual PUSCH transmission) may be used, or the reference format may be used.

### <Assumption 2 on Another Carrier Or Cell in DWS Configured Carrier Or Cell>

Terminal 200 may assume that the PUSCH is not transmitted in the carrier or the cell where DWS is not configured.

The assumption on the carrier or the cell where the DWS is not configured has been described above.

The information on the uplink power headroom in the DWS configured carrier or cell may be determined based on, for example, any of above-described Embodiment 1 and Variations 1 to 3.

In addition, for example, for the feedback of the information on the uplink power headroom of the carrier or the cell where the DWS is not configured, terminal 200 determines information (for example, the value of P_{CMAX,f,c}) on power headroom (or assumed power headroom) corresponding to the transmission waveform (current waveform) that is currently configured for the carrier or the cell, and feeds back the information.

In this case, terminal 200 may calculate the information on the uplink power headroom of the carrier or the cell where the DWS is not configured, by assuming each of a case where the PUSCH is transmitted based on the transmission waveform (current waveform) that is currently configured for the DWS configured carrier or cell and a case where the PUSCH is transmitted based on the transmission waveform (target waveform) that is not currently configured for the DWS configured carrier or cell. Therefore, the information on the uplink power headroom of the carrier or the cell where the DWS is not configured may include information on the power headroom assuming the PUSCH transmission based on the current waveform for the DWS configured carrier or cell and information on the power headroom assuming the PUSCH transmission based on the target waveform for the DWS configured carrier or cell.

According to the present embodiment, when terminal 200 reports the information on the uplink power headroom, terminal 200 can report the information on the power headroom corresponding to each candidate for the configuration related to the transmission waveform for the other carrier or cell. As a result, base station 100 can obtain the information on the power headroom of terminal 200 by taking into consideration the dynamic transmission waveform switching (DWS) of the other carrier or cell. As a result, base station 100 can perform appropriate scheduling for terminal 200 in a case where the DWS is configured in the CA/DC scenario.

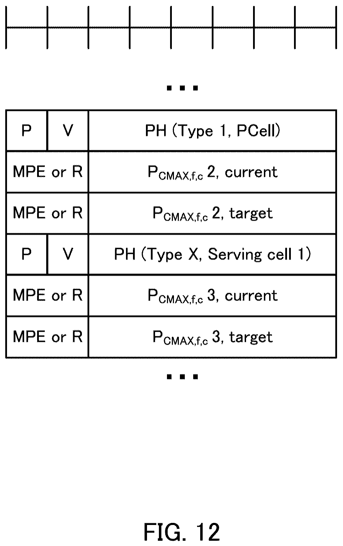

FIG. 12 shows an example of a part of the multiple PHR MAC-CE according to the present embodiment.

FIG. 12 shows an example of a case where the DWS is configured for the PCell and the DWS is not configured for serving cell 1. That is, in FIG. 12, the PCell corresponds to the "DWS configured carrier or cell," and serving cell 1 corresponds to the "carrier or cell where DWS is not configured."

As shown in FIG. 12, the information on the uplink power headroom of the PCell (for example, fields in rows 1 to 3 in FIG. 12) includes information (P_{CMAX,f,c,2,target waveform}) (in FIG. 12, "P_{CMAX,f,c}2, target") on the uplink power headroom for the transmission waveform (target waveform) that is not currently configured for the PCell, in addition to information (P_{CMAX,f,c,2,current waveform}) (in FIG. 12, "P_{CMAX,f,c}2, current") on the uplink power headroom for the transmission waveform (current waveform) that is currently configured for the PCell.

In a case where terminal 200 calculates the information on the power headroom for each of the current waveform and the target waveform for the PCell, for example, any of the above assumptions (for example, any of Assumption 1 or Assumption 2) may be applied to serving cell 1.

In addition, as shown in FIG. 12, the information on the uplink power headroom of serving cell 1 (for example, fields in rows 4 to 6 in FIG. 12) includes information on the uplink remaining transmission power for the transmission waveform (current waveform) that is currently configured for serving cell 1.

In a case where terminal 200 calculates the information on the power headroom of the current waveform for serving cell 1, the information on the power headroom assuming that the PUSCH is transmitted by using the transmission waveform (current waveform) that is currently configured for the PCell (P_{CMAX,f,c,3,current waveform}) (in FIG. 12, "P_{CMAX,f,c}3, current"), and the information on the power headroom assuming that the PUSCH is transmitted by using the transmission waveform (target waveform) that is not currently configured for the PCell (P_{CMAX,f,c,3,target waveform}) (in FIG. 12, "P_{CMAX,f,c}3, target") may be included.

As described above, in the present embodiment, terminal 200 can appropriately determine the information on the uplink power headroom of each carrier or cell by taking into consideration the transmission waveform for each of the plurality of carriers or cells to which CA/DC is applied, as in Embodiment 1. In addition, base station 100 can perform appropriate scheduling in the uplink for terminal 200 by taking into consideration the transmission waveform for each of the plurality of carriers or cells to which CA/DC is applied, using the feedback information.

Therefore, according to the present embodiment, terminal 200 can appropriately transmit the signal in the uplink.

In addition, in the present embodiment, with respect to the carrier or the cell where the DWS is not configured, terminal 200 feeds back the information on the power headroom in consideration of a plurality of transmission waveforms that can be configured for the DWS configured carrier or cell to base station 100. As a result, for the carrier or the cell where the DWS is not configured, base station 100 can perform the scheduling for terminal 200 by taking into consideration the plurality of transmission waveforms that can be configured for the DWS configured carrier or cell.

### (Embodiment 3)

In the present embodiment, a plurality of carriers or cells (for example, a plurality of frequency bands) are configured for terminal 200. Terminal 200 feeds back, for example, information on uplink power headroom in the plurality of configured carriers or cells.

In the present embodiment, for example, in feedback of the information on the uplink power headroom of the carrier or the cell for which DWS is configured (or applied) (DWS configured carrier or cell), terminal 200 determines information on uplink power headroom corresponding to a transmission waveform (hereinafter, also referred to as a "current waveform") that is currently configured for the DWS configured carrier or cell, and information (for example, the value of P_{CMAX,f,c}) on uplink power headroom corresponding to a transmission waveform (target waveform) that is not currently configured for the DWS configured carrier or cell, and feeds back the information.

In this case, terminal 200 may calculate (or determine) the information on the uplink power headroom of the DWS configured carrier or cell by applying one of the following assumptions on transmission (for example, PUSCH transmission) of a signal in another carrier or cell (for example, a carrier or a cell for which DWS is not configured (or applied)).

### <Assumption 1 on Another Carrier Or Cell in DWS Configured Carrier Or Cell>

In the carrier or the cell where DWS is not configured, terminal 200 may assume that the PUSCH is transmitted based on the transmission waveform that is currently configured for the carrier or the cell.

For configuration of other parameters different from the transmission waveform, such as resource allocation or modulation and coding scheme (MCS) of the PUSCH, configuration actually allocated to the PUSCH (for example, actual PUSCH transmission) may be used, or the reference format may be used.

### <Assumption 2 on Another Carrier Or Cell in DWS Configured Carrier Or Cell>

Terminal 200 may assume that the PUSCH is not transmitted in the carrier or the cell where DWS is not configured.

The assumption on the carrier or the cell where the DWS is not configured has been described above.

The information on the uplink power headroom in the DWS configured carrier or cell may be determined based on, for example, any of above-described Embodiment 1 and Variations 1 to 3.

In addition, for example, for the feedback of the information on the uplink power headroom of the carrier or the cell where the DWS is not configured, terminal 200 determines information (for example, the value of P_{CMAX,f,c}) on power headroom (or assumed power headroom) corresponding to the transmission waveform (current waveform) that is currently configured for the carrier or the cell, and feeds back the information.

In a case of calculating the information on the uplink power headroom of the carrier or the cell where the DWS is not configured, terminal 200 may individually configure the assumption of the DWS configured carrier or cell for the carrier or the cell where the DWS is not configured.

For example, for calculation of the information on the uplink power headroom of the carrier or the cell where the DWS is not configured, terminal 200 may individually apply, to the carrier or the cell where the DWS is not configured, any of the assumption that the PUSCH is transmitted by applying the reference transmission waveform in the DWS configured carrier or cell (hereinafter, referred to as "Type B") as in Embodiment 1, and the assumption of the case where the PUSCH is transmitted by using the transmission waveform (current waveform) that is currently configured for the DWS configured carrier or cell and the case where the PUSCH is transmitted by using the transmission waveform (target waveform) that is not currently configured for the DWS configured carrier or cell (hereinafter, referred to as "Type A") as in Embodiment 2.

Any of Options 1 to 3 described in Embodiment 1 may be applied to the reference transmission waveform used in Type B, a plurality of pieces of information on the remaining transmission power may be reported assuming both Option 1 and Option 2, or which of Option 1 and Option 2 is assumed may be individually configured for each cell.

For example, which of Type A or Type B is applied to each carrier or cell may be indicated from terminal 200 to base station 100 by a field in the PHR MAC-CE, may be configured for terminal 200 by higher layer signaling such as the RRC from base station 100, or may be configursed for terminal 200 by the DCI from base station 100.

According to the present embodiment, when terminal 200 reports the information on the uplink power headroom, terminal 200 applies Type A to a certain carrier or cell to be capable of reporting the information on the power headroom corresponding to each candidate for the configuration related to the transmission waveform for the other carrier or cell. In addition, by applying Type B to one carrier or cell, overhead related to the reporting of the information on the power headroom can be reduced as compared with Type A.

For example, Type A may be applied to a carrier or a cell that shares an RF amplifier with the carrier or the cell for which the DWS is configured. As a result, base station 100 can obtain the information on the power headroom of terminal 200 by taking into consideration the dynamic transmission waveform switching (for example, the current waveform and the target waveform) for the carrier or the cell that may be affected by the dynamic transmission waveform switching of the other carrier or cell. Therefore, in a case where the DWS is configured in the CA/DC scenario, base station 100 can perform appropriate scheduling for terminal 200.

In addition, for example, Type B may be applied to a carrier or a cell that does not share the RF amplifier with the carrier or the cell for which the DWS is configured. As a result, for the carrier or the cell, the carrier or the cell is less likely to be affected by the dynamic transmission waveform switching of the other carrier or cell, and an increase in the overhead related to the reporting of the information on the power headroom can be suppressed.

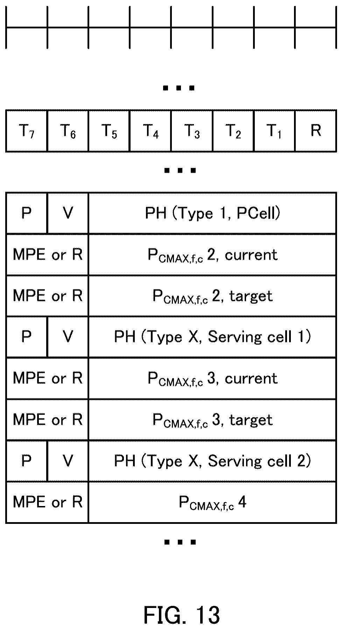

FIG. 13 shows an example of a part of the multiple PHR MAC-CE according to the present embodiment.

FIG. 13 shows an example of a case where the DWS is configured for the PCell and the DWS is not configured for serving cell 1 and serving cell 2. That is, in FIG. 13, the PCell corresponds to the "DWS configured carrier or cell," and serving cell 1 and serving cell 2 correspond to the "carrier or cell where DWS is not configured."

As shown in FIG. 13, the information on the uplink power headroom of the PCell (for example, fields in rows 2 to 4 in FIG. 13) includes information (P_{CMAX,f,c,2,target waveform}) (in FIG. 13, "P_{CMAX,f,c}2, target") on the uplink power headroom for the transmission waveform (target waveform) that is not currently configured for the PCell, in addition to information (P_{CMAX,f,c,2,current waveform}) (in FIG. 13, "P_{CMAX,f,c}2, current") on the uplink power headroom for the transmission waveform (current waveform) that is currently configured for the PCell.

In a case where terminal 200 calculates the information on the power headroom for each of the current waveform and the target waveform for the PCell, for example, any of the above-described assumptions (for example, any of Assumption 1 or Assumption 2) may be applied to serving cell 1 and serving cell 2.

In addition, as shown in FIG. 13, the information on the uplink power headroom of each of serving cell 1 and serving cell 2 (for example, fields in rows 5 to 9 in FIG. 13) includes information on the uplink remaining transmission power for the transmission waveform (current waveform) that is currently configured for each of serving cell 1 and serving cell 2.

In the example of FIG. 13, in a case where terminal 200 calculates the information on the power headroom of serving cell 1 and serving cell 2, for example, Type A is applied to serving cell 1, and Type B is applied to serving cell 2.

In a case where the information on which of Type A and Type B is applied to each carrier or cell is indicated by a field in the PHR MAC-CE, the field (field in row 1 in FIG. 13) related to the indication may be included in the PHR MAC-CE. For example, "Tᵢ" in FIG. 13 indicates a field (for example, 1 bit for each serving cell) indicating which of Type A or Type B is applied to servingCellIndex i.

For example, the field (fields in rows 5 to 7 in FIG. 13) for serving cell 1 to which Type A is applied includes information (P_{CMAX,f,c,3,current waveform}) (in FIG. 13, "P_{CMAX,f,c}3, current") on the power headroom assuming that the PUSCH is transmitted by using the transmission waveform (current waveform) that is currently configured for the PCell and information (P_{CMAX,fc,3,target waveform}) (in FIG. 13, "P_{CMAX,f,c}3, target") on the power headroom assuming that the PUSCH is transmitted by using the transmission waveform (target waveform) that is not currently configured for the PCell.

In addition, for example, the field (fields in rows 8 and 9 in FIG. 13) for serving cell 2 to which Type B is applied includes information (P_{CMAX,f,c,4}) (in FIG. 13, "P_{CMAX,f,c}4") on the power headroom assuming that the PUSCH is transmitted by applying the reference transmission waveform in the PCell.

As a result, terminal 200 can report, to serving cell 1, the information on the power headroom corresponding to each candidate for the configuration related to the transmission waveform for the other carrier or cell (for example, the PCell). In addition, the overhead related to the reporting of the information on the power headroom to serving cell 2 can be reduced as compared with a case where Type A is applied (for example, serving cell 1).

As described above, in the present embodiment, terminal 200 can appropriately determine the information on the uplink power headroom of each carrier or cell by taking into consideration the transmission waveform for each of the plurality of carriers or cells to which CA/DC is applied, as in Embodiment 1. In addition, base station 100 can perform appropriate scheduling in the uplink for terminal 200 by taking into consideration the transmission waveform for each of the plurality of carriers or cells to which CA/DC is applied, using the feedback information.

Therefore, according to the present embodiment, terminal 200 can appropriately transmit the signal in the uplink.

In addition, in the present embodiment, for the carrier or the cell where the DWS is not configured, terminal 200 can determine, for each carrier or cell, the assumption of the plurality of transmission waveforms that can be configured for the DWS configured carrier or cell and feed back the information on the power headroom corresponding to a situation (for example, the sharing situation of the RF amplifier) of each of the carriers or cells where the DWS is not configured to base station 100.

### (Variation 4)

Terminal 200 may indicate base station 100 of information (for example, RF design information of terminal 200) on which carrier or cell shares the RF amplifier in CA/DC, for each combination of bands (band combination), using terminal capability signaling (UE capability signaling).

In this case, in Embodiment 3, the information on which of Type A and Type B is applied to each carrier or cell may not be indicated from terminal 200 to base station 100 by a field in the PHR MAC-CE, and can be configured for terminal 200 by the RRC or the like from base station 100, thereby reducing the overhead of the MAC-CE.

The embodiments according to a non-limiting example of the present disclosure have been each described, thus far.

### [Exemplary Operation of Terminal 200]

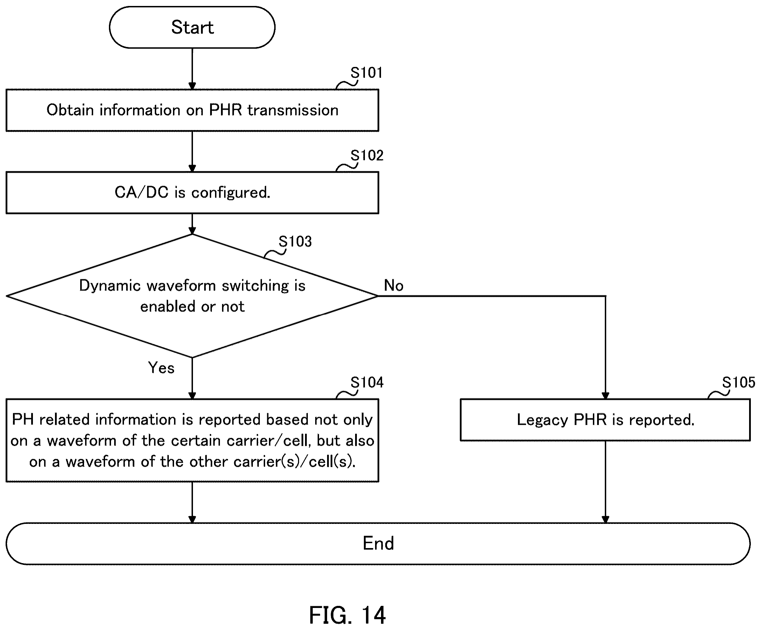

FIG. 14 is a flowchart showing an exemplary operation of terminal 200.

In FIG. 14, terminal 200 obtains information on PHR transmission (S101). The information on the PHR transmission may include, for example, information on a trigger of the PHR transmission (for example, a timer, a threshold for pass loss, or the like) and information on a content of the PHR (for example, a threshold for the P-MPR, reference transmission configuration, or the like).

Terminal 200 configures, for example, CA/DC (S102).

Terminal 200 determines whether or not the dynamic transmission waveform switching (DWS) is configured (or is enabled) (S103).

In a case where the DWS is configured (S103: Yes), terminal 200 determines the information on the uplink power headroom for each carrier or cell of the plurality of carriers or cells used for the CA/DC based on the transmission waveform of the carrier or the cell and the transmission waveform for another carrier or cell, and reports the determined information on the power headroom to base station 100 (S104).

On the other hand, in a case where the DWS is not configured (S103: No), terminal 200 reports the information on the power headroom (for example, legacy PHR) to base station 100, for example, according to a legacy method (S105).

### [Configuration of Base Station]

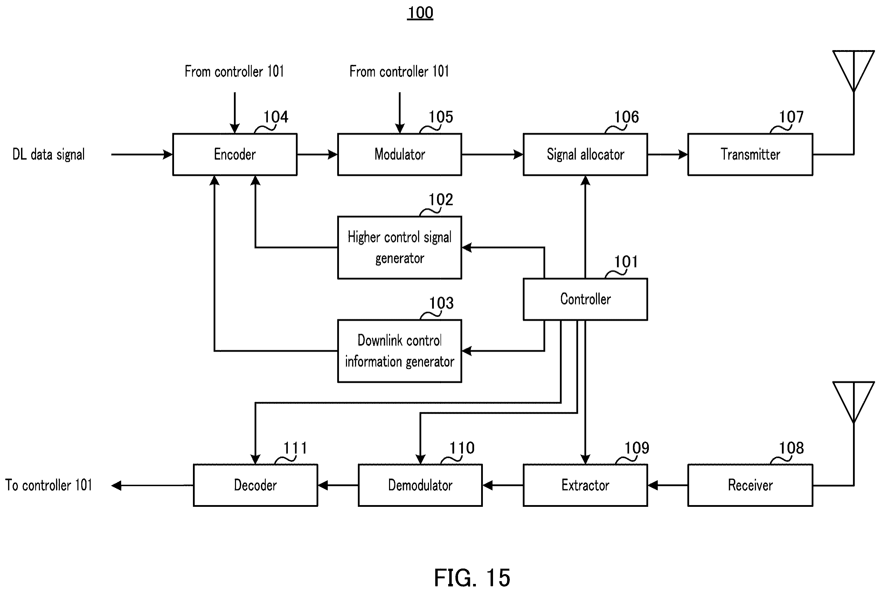

FIG. 15 is a block diagram showing an exemplary configuration of base station 100 according to Embodiment 1. In FIG. 15, base station 100 includes controller 101, higher control signal generator 102, downlink control information generator 103, encoder 104, modulator 105, signal allocator 106, transmitter 107, receiver 108, extractor 109, demodulator 110, and decoder 111.

At least one of controller 101, higher control signal generator 102, downlink control information generator 103, encoder 104, modulator 105, signal allocator 106, extractor 109, demodulator 110, and decoder 111 shown in FIG. 15 may be included in the controller shown in FIG. 7. In addition, receiver 108 shown in FIG. 15 may be included in the receiver shown in FIG. 7.

Controller 101 determines information on uplink transmission (for example, PUSCH transmission) to terminal 200 or information on the PHR based on, for example, information input from decoder 111, and outputs the determined information to at least one of higher control signal generator 102 or downlink control information generator 103. The information on the PUSCH transmission may include, for example, information on a transmission waveform, resource allocation information, or information on a modulation and coding scheme (MCS). Further, controller 101 outputs the determined information to extractor 109, demodulator 110, and decoder 111.

In addition, controller 101 determines, for example, information (for example, MCS and radio resource allocation) on a downlink signal for transmitting a higher control signal or downlink control information, and outputs the determined information to encoder 104, modulator 105, and signal allocator 106. In addition, controller 101 outputs, for example, the information on the downlink signal (for example, a data signal or the higher control signal) to downlink control information generator 103.

Higher control signal generator 102 generates a higher layer control signal bit string, for example, based on the information inputted from controller 101, and outputs the higher layer control signal bit string to encoder 104.

Downlink control information generator 103 generates a downlink control information (for example, DCI) bit string, for example, based on the information inputted from controller 101, and outputs the generated DCI bit string to encoder 104. Note that, the control information may be transmitted to a plurality of terminals.

Encoder 104 encodes, for example, a downlink data signal, a bit string input from higher control signal generator 102, or a DCI bit string input from downlink control information generator 103 based on the information input from controller 101. Encoder 104 outputs the encoded bit string to modulator 105.

Modulator 105 modulates encoded bit string inputted from encoder 104, for example, based on the information inputted from controller 101, and outputs the modulated signal (for example, a symbol string) to signal allocator 106.

Signal allocator 106 maps, for example, the symbol string (including, for example, the downlink data signal or the control signal) input from modulator 105 to radio resources based on the information indicating the radio resources input from controller 101. Signal allocator 106 outputs a signal that has been mapped to a downlink to transmitter 107.

Transmitter 107 performs, for example, transmission waveform generation processing such as orthogonal frequency division multiplexing (OFDM), on a signal inputted, for example, from signal allocator 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108 performs RF processing such as down-conversion or A/D conversion on the uplink signal received from terminal 200 through, for example, an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, a radio resource portion on which an uplink signal (for example, PUSCH or PUCCH) is transmitted, from the reception signal input from receiver 108 based on the information input from controller 101, and outputs the extracted radio resource portion to demodulator 110.

Demodulator 110 demodulates, for example, the uplink signal (for example, PUSCH or PUCCH) input from extractor 109 based on the information input from controller 101. Demodulator 110 outputs, for example, the demodulation result to decoder 111.

Decoder 111 performs error correction decoding on the uplink signal (for example, PUSCH or PUCCH) based on, for example, the information input from controller 101 and the demodulation result input from demodulator 110, to obtain a received bit string after decoding. For example, in a case where the information on the power headroom (for example, PHR) is included in the received bit string after decoding, decoder 111 outputs the information on the power headroom to controller 101.

### [Configuration of Terminal]

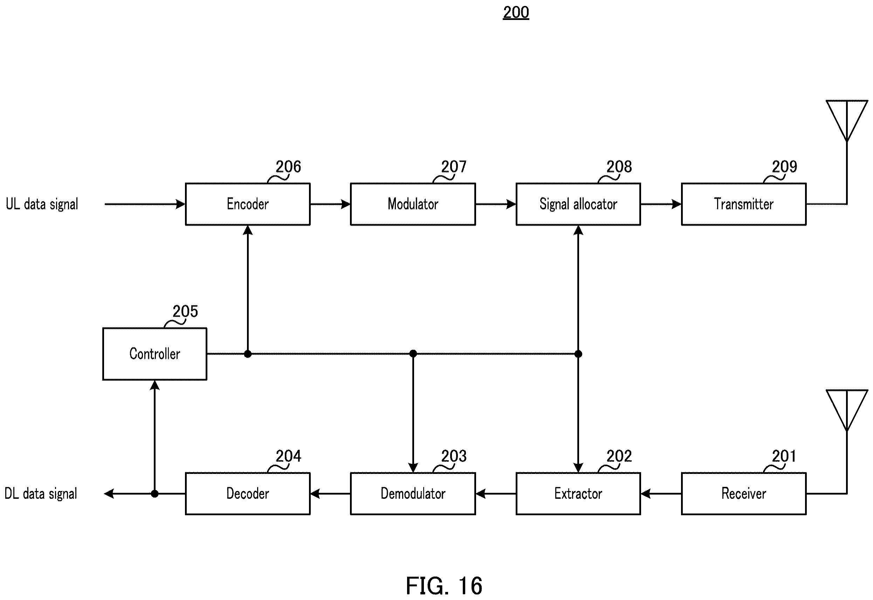

FIG. 16 is a block diagram showing an exemplary configuration of terminal 200 according to an exemplary embodiment of the present disclosure. For example, in FIG. 16, terminal 200 includes receiver 201, extractor 202, demodulator 203, decoder 204, controller 205, encoder 206, modulator 207, signal allocator 208, and transmitter 209.

At least one of extractor 202, demodulator 203, decoder 204, controller 205, encoder 206, modulator 207, and signal allocator 208 shown in FIG. 16 may be included in the controller shown in FIG. 8. In addition, transmitter 209 shown in FIG. 16 may be included in the transmitter shown in FIG. 8.

Receiver 201 receives, for example, a downlink signal (for example, a downlink data signal or downlink control information) from base station 100 via an antenna, and performs RF processing such as downconversion or A/D conversion on a radio reception signal, to obtain a reception signal (baseband signal). Further, when receiver 201 receives an OFDM signal, receiver 201 performs FFT processing on the received signal and converts the received signal into that in the frequency domain. Receiver 201 outputs the received signal to extractor 202.

Extractor 202 extracts, for example, based on information on a radio resource in downlink control information, which is inputted from controller 205, a radio resource portion, which may include downlink control information, from the received signal inputted from receiver 201, and outputs the radio resource portion to demodulator 203. In addition, extractor 202 extracts a radio resource portion including the downlink data signal based on information on the radio resources of the data signal input from controller 205, and outputs the radio resource portion to demodulator 203.

Demodulator 203 demodulates, for example, based on information inputted from controller 205, a signal inputted (for example, PDCCH or PDSCH) from extractor 202, and outputs the demodulation result to decoder 204.

Decoder 204 performs error correction decoding on the PDCCH or the PDSCH using, for example, the demodulation result input from demodulator 203, to obtain, for example, a higher layer control signal or downlink control information. Decoder 204 outputs the higher layer control signal and the downlink control information to controller 205. Further, decoder 204 may generate a response signal (for example, ACK/NACK) based on the decoding result of the PDSCH.

Controller 205 performs uplink transmission control (for example, determination of a transmission waveform for PUSCH transmission and information included in PHR transmission) according to the above-described method based on, for example, information on the PUSCH transmission obtained from the signal (for example, the higher layer control signal or downlink control information) input from decoder 204, or information on the PHR transmission. Controller 205 outputs the determined information to, for example, encoder 206 and signal allocator 208.

Encoder 206 encodes an uplink data signal (UL data signal) or an uplink control signal based on the information inputted from controller 205, for example. Encoder 206 outputs the encoded bit string to modulator 207.

Modulator 207 modulates, for example, the encoded bit string inputted from encoder 206, and outputs the modulated signal (symbol string) to signal allocator 208.

Signal allocator 208 maps a signal (for example, a sequence) inputted from modulator 207 to a radio resource, for example, based on the information inputted from controller 205. Signal allocator 208 outputs, for example, an uplink signal in which the signal is mapped, to transmitter 209.

Transmitter 209 generates a transmission signal waveform, such as OFDM, for the signal inputted from signal allocator 208. Further, in the case of an OFDM transmission using a CP, for example, transmitter 209 performs IFFT processing on the signal and adds a CP to the signal after the IFFT. Alternatively, in a case where transmitter 209 generates a single carrier waveform, for example, a DFT section (not shown) may be added after modulator 207 or before signal allocator 208. In addition, transmitter 209 performs, for example, RF processing such as D/A conversion and upconversion on a transmission signal, and transmits a radio signal to base station 100 via the antenna.

### (Other Embodiments)

Embodiment 2 or Embodiment 3 may be applied in a case where a plurality of DWS configured carriers or cells are present. In this case, for the feedback of the information on the uplink power headroom of the carrier or the cell for which the DWS is configured (DWS configured carrier or cell), terminal 200 feeds back the information on the power headroom (for example, the value of P_{CMAX,f,c}) of the transmission waveform (target waveform) that is not currently configured for the carrier or the cell, in addition to the information on the uplink power headroom for the transmission waveform (current waveform) that is currently configured for the carrier or the cell.

In addition, terminal 200 may calculate, as the information on the uplink power headroom of the DWS configured carrier or cell, a value assuming both a case where the current waveform is applied and a case where the target waveform is applied in another DWS configured carrier or cell.

For example, in a case where the DWS is applied in the PCell and serving cell 1, the information on the uplink power headroom of the PCell may include information on the uplink power headroom with respect to combinations (assumptions) of transmission waveforms of (PCell = current waveform, serving cell 1 = current waveform), (PCell = current waveform, serving cell 1 = target waveform), (PCell = target waveform, serving cell 1 = current waveform), and (PCell = target waveform, serving cell 1 = target waveform).

In addition, in each of the above-described embodiments, a case where the PCell is used as an example of the DWS configured carrier or cell and the serving cell is used as an example of the carrier/cell where the DWS is not configured (another carrier or cell) has been described, but the DWS configured carrier or cell and the carrier/cell where the DWS is not configured are not limited to these, and may be other types of carriers, cells, or frequency bands.

In addition, although an example in which the carrier and the cell are used as resources used for communication by terminal 200 has been described, the resources are not limited to the carrier or the cell, and may be in units of other frequency bands or other resource units.

In addition, in each of the above-described embodiments, the transmission waveform is not limited to two types of DFT-s-OFDM and CP-OFDM, and may be another transmission waveform, and the number of types of transmission waveforms that can be applied may be three or more.

In addition, the units in the calculation of the power value in each of the above-described embodiments may be in true values (linear domain) or in dB units (logarithmic domain).

In addition, in each of the above-described embodiments, the channel used for the uplink transmission is not limited to the PUSCH and the PUCCH, and may be another channel. Further, the type of information to be transmitted is not limited to data, and may be information of another type (for example, an uplink control signal). Further, an exemplary embodiment of the present disclosure is not limited to the uplink transmission, but may be applied to downlink transmission or sidelink transmission.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

### (Supplementary Note)

Information indicating whether terminal 200 supports the functions, operations, or pieces of processing that have been indicated in the above-mentioned embodiments and supplementary notes may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and supplementary notes. Alternatively, the capability information may include information elements that indicate whether terminal 200 supports a combination of any two or more of the functions, operations, or pieces of processing that have been described in the above-mentioned embodiments, variations, and supplementary notes.

Based on, for example, the capability information received from terminal 200, base station 100 may determine (or decide or assume) a function, an operation, or processing supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, the base station may be replaced with a terminal. The base station may be a relay apparatus that relays communication between a higher node and a terminal. The base station may be a roadside unit as well.

### (Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and sidelink channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

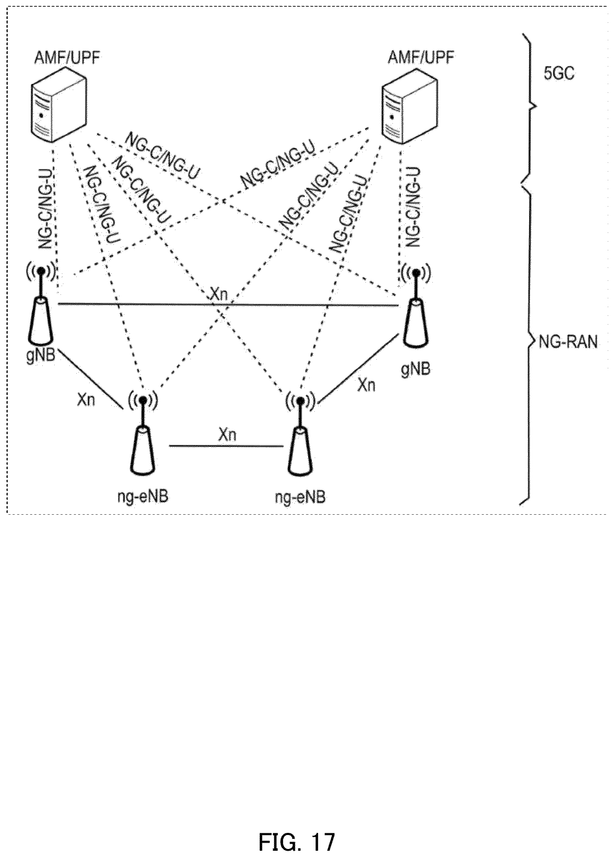

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 17 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

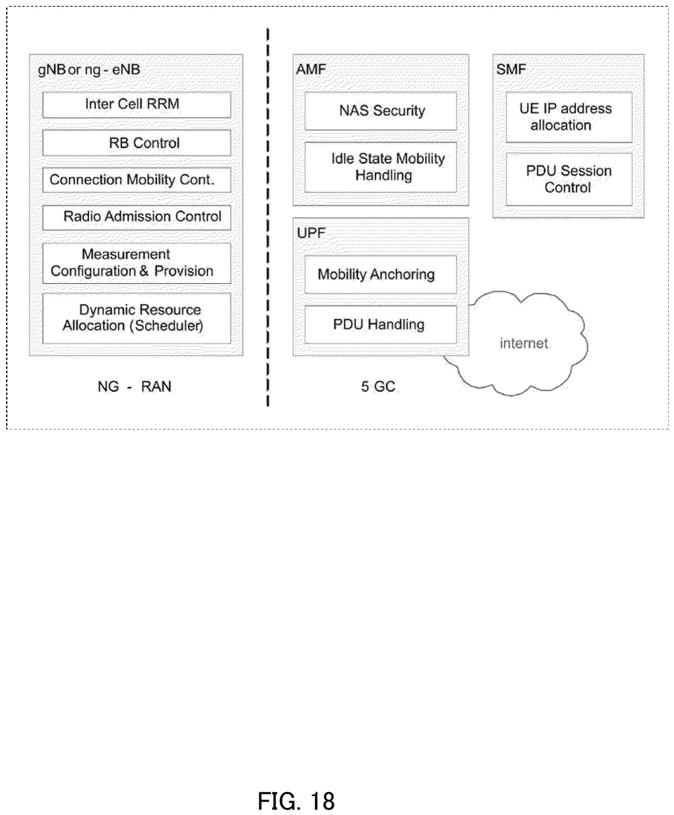

FIG. 18 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

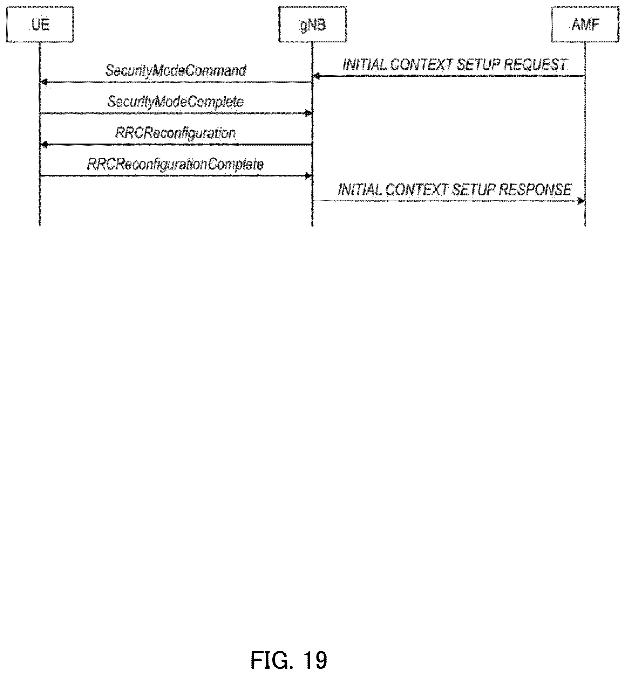

FIG. 19 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

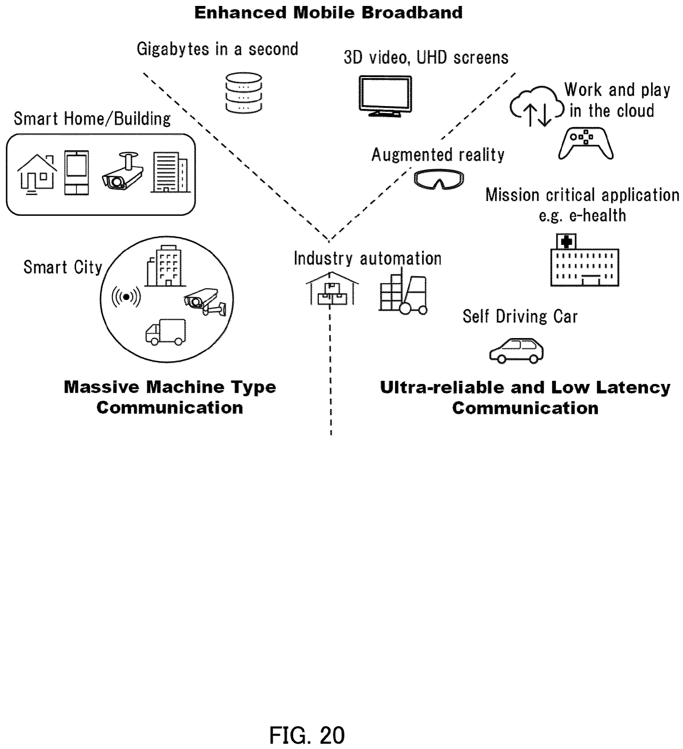

FIG. 20 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 20 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 19. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

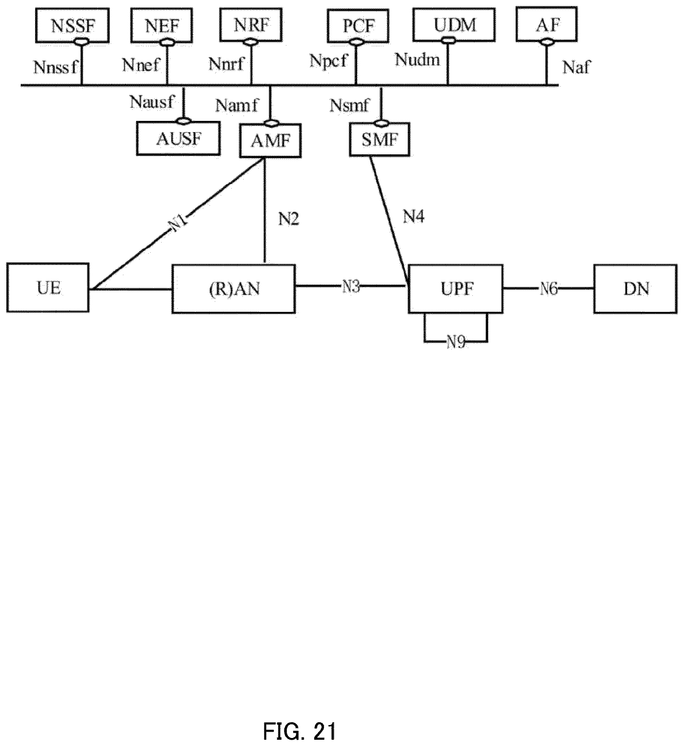

FIG. 21 illustrates a 5G NR non-roaming reference architecture (see TS 23.501 v16.1.0, section 4.23). An Application Function (AF) (e.g., an external application server hosting 5G services, exemplarily described in FIG. 20) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 21 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to one exemplary embodiment of the present disclosure includes: control circuitry, which, in operation, determines information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and transmission circuitry, which, in operation, transmits the information on the power headroom.

In one exemplary embodiment of the present disclosure, dynamic transmission waveform switching is configured for the first frequency band, and the control circuitry determines information on first power headroom corresponding to a first transmission waveform configured for the first frequency band and information on second power headroom corresponding to a second transmission waveform not configured for the first frequency band.

In one exemplary embodiment of the present disclosure, the dynamic transmission waveform switching is not configured for the second frequency band, and the control circuitry determines the information on the first power headroom and the information on the second power headroom based on an assumption of transmission of a signal in the second frequency band.

In one exemplary embodiment of the present disclosure, the control circuitry assumes that the signal is transmitted based on the transmission waveform configured for the second frequency band.

In one exemplary embodiment of the present disclosure, the control circuitry assumes that the signal is not transmitted in the second frequency band.

In one exemplary embodiment of the present disclosure, the dynamic transmission waveform switching is not configured for the second frequency band, and at least one of the information on the first power headroom and the information on the second power headroom includes: information on power headroom assuming that a signal is transmitted based on the transmission waveform configured for the second frequency band, and information on power headroom assuming that the signal is not transmitted in the second frequency band.

In one exemplary embodiment of the present disclosure, the control circuitry determines, individually for each of a plurality of the second frequency bands, any one of an assumption that the signal is transmitted based on a configured transmission waveform and an assumption that the signal is not transmitted.

In one exemplary embodiment of the present disclosure, dynamic transmission waveform switching is configured for a plurality of the first frequency bands, and the control circuitry determines the information on the power headroom corresponding to a frequency band among the plurality of first frequency bands based on a reference transmission waveform for another frequency band among the plurality of first frequency bands.

In one exemplary embodiment of the present disclosure, dynamic transmission waveform switching is not configured for the first frequency band, and the control circuitry determines the information on the power headroom based on the transmission waveform configured for the second frequency band.

In one exemplary embodiment of the present disclosure, dynamic transmission waveform switching is configured for the second frequency band, and the control circuitry determines the information on the power headroom for the first frequency band based on a reference transmission waveform for the second frequency band.

In one exemplary embodiment of the present disclosure, the reference transmission waveform is any one of the transmission waveform configured for the second frequency band and a transmission waveform not configured for the second frequency band.

In one exemplary embodiment of the present disclosure, the reference transmission waveform is determined in advance by a standard, is configured for the terminal by higher layer signaling, or is configured for the terminal by downlink control information.

In one exemplary embodiment of the present disclosure, dynamic transmission waveform switching is configured for the second frequency band, and the information on the power headroom includes: information on power headroom assuming that a signal is transmitted based on the transmission waveform configured for the second frequency band, and information on power headroom assuming that the signal is transmitted based on a transmission waveform not configured for the second frequency band.

In one exemplary embodiment of the present disclosure, dynamic transmission waveform switching is configured for the second frequency band, information on the power headroom corresponding to a partial frequency band among a plurality of the first frequency bands includes information on the power headroom based on a reference transmission waveform for the second frequency band, and information on the power headroom corresponding to another frequency band among the plurality of first frequency bands that is different from the partial frequency band includes: information on the power headroom assuming that a signal is transmitted based on the transmission waveform configured for the second frequency band, and information on the power headroom assuming that the signal is transmitted based on a transmission waveform not configured for the second frequency band.

A base station according to one exemplary embodiment of the present disclosure includes: reception circuitry, which, in operation, receives information on power headroom in an uplink for a first frequency band among a plurality of frequency bands in communication using the plurality of frequency bands, the information being determined based on a transmission waveform for the first frequency band and a transmission waveform for a second frequency band of the plurality of frequency bands that is different from the first frequency band; and control circuitry, which, in operation, controls uplink transmission based on the information on the power headroom.

A communication method for a terminal according to one exemplary embodiment of the present disclosure includes: determining information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and transmitting the information on the power headroom.

A communication method for a base station according to one exemplary embodiment of the present disclosure includes: receiving information on power headroom in an uplink for a first frequency band among a plurality of frequency bands in communication using the plurality of frequency bands, the information being determined based on a transmission waveform for the first frequency band and a transmission waveform for a second frequency band of the plurality of frequency bands that is different from the first frequency band; and controlling uplink transmission based on the information on the power headroom.

The disclosure of Japanese Patent Application No. 2023-020716, filed on February 14, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102 Higher control signal generator
103 Downlink control information generator
104, 206 Encoder
105, 207 Modulator
106, 208 Signal allocator
107, 209 Transmitter
108, 201 Receiver
109, 202 Extractor
110, 203 Demodulator
111, 204 Decoder
200 Terminal

## Claims

1. A terminal, comprising:
control circuitry, which, in operation, determines information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and
transmission circuitry, which, in operation, transmits the information on the power headroom.

2. The terminal according to claim 1, wherein:
dynamic transmission waveform switching is configured for the first frequency band, and
the control circuitry determines information on first power headroom corresponding to a first transmission waveform configured for the first frequency band and information on second power headroom corresponding to a second transmission waveform not configured for the first frequency band.

3. The terminal according to claim 2, wherein:
the dynamic transmission waveform switching is not configured for the second frequency band, and
the control circuitry determines the information on the first power headroom and the information on the second power headroom based on an assumption of transmission of a signal in the second frequency band.

4. The terminal according to claim 3, wherein
the control circuitry assumes that the signal is transmitted based on the transmission waveform configured for the second frequency band.

5. The terminal according to claim 3, wherein
the control circuitry assumes that the signal is not transmitted in the second frequency band.

6. The terminal according to claim 2, wherein:
the dynamic transmission waveform switching is not configured for the second frequency band, and
at least one of the information on the first power headroom and the information on the second power headroom includes:
information on power headroom assuming that a signal is transmitted based on the transmission waveform configured for the second frequency band, and
information on power headroom assuming that the signal is not transmitted in the second frequency band.

7. The terminal according to claim 3, wherein
the control circuitry determines, individually for each of a plurality of the second frequency bands, any one of an assumption that the signal is transmitted based on a configured transmission waveform and an assumption that the signal is not transmitted.

8. The terminal according to claim 1, wherein:
dynamic transmission waveform switching is configured for a plurality of the first frequency bands, and
the control circuitry determines the information on the power headroom corresponding to a frequency band among the plurality of first frequency bands based on a reference transmission waveform for another frequency band among the plurality of first frequency bands.

9. The terminal according to claim 1, wherein:
dynamic transmission waveform switching is not configured for the first frequency band, and
the control circuitry determines the information on the power headroom based on the transmission waveform configured for the second frequency band.

10. The terminal according to claim 9, wherein:
dynamic transmission waveform switching is configured for the second frequency band, and
the control circuitry determines the information on the power headroom in the first frequency band based on a reference transmission waveform for the second frequency band.

11. The terminal according to claim 10, wherein
the reference transmission waveform is any one of the transmission waveform configured for the second frequency band and a transmission waveform not configured for the second frequency band.

12. The terminal according to claim 10, wherein
the reference transmission waveform is determined in advance by a standard, is configured for the terminal by higher layer signaling, or is configured for the terminal by downlink control information.

13. The terminal according to claim 9, wherein:
dynamic transmission waveform switching is configured for the second frequency band, and
the information on the power headroom includes:
information on power headroom assuming that a signal is transmitted based on the transmission waveform configured for the second frequency band, and
information on power headroom assuming that the signal is transmitted based on a transmission waveform not configured for the second frequency band.

14. The terminal according to claim 9, wherein:
dynamic transmission waveform switching is configured for the second frequency band,
information on the power headroom corresponding to a partial frequency band among a plurality of the first frequency bands includes information on the power headroom based on a reference transmission waveform for the second frequency band, and
information on the power headroom corresponding to another frequency band among the plurality of first frequency bands that is different from the partial frequency band includes:
information on the power headroom assuming that a signal is transmitted based on the transmission waveform configured for the second frequency band, and
information on the power headroom assuming that the signal is transmitted based on a transmission waveform not configured for the second frequency band.

15. A base station, comprising:
reception circuitry, which, in operation, receives information on power headroom in an uplink for a first frequency band among a plurality of frequency bands in communication using the plurality of frequency bands, the information being determined based on a transmission waveform for the first frequency band and a transmission waveform for a second frequency band of the plurality of frequency bands that is different from the first frequency band; and
control circuitry, which, in operation, controls uplink transmission based on the information on the power headroom.

16. A communication method for a terminal, comprising:
determining information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and
transmitting the information on the power headroom.

17. A communication method for a base station, comprising:
receiving information on power headroom in an uplink for a first frequency band among a plurality of frequency bands in communication using the plurality of frequency bands, the information being determined based on a transmission waveform for the first frequency band and a transmission waveform for a second frequency band of the plurality of frequency bands that is different from the first frequency band; and
controlling uplink transmission based on the information on the power headroom.

18. An integrated circuit, which, in operation, controls a process of a terminal, the process comprising:
a process of determining information on power headroom in an uplink for a first frequency band among a plurality of frequency bands in communication using the plurality of frequency bands, based on a transmission waveform for the first frequency band and a transmission waveform for a second frequency band of the plurality of frequency bands that is different from the first frequency band; and
a process of transmitting the information on the power headroom.

19. An integrated circuit, which, in operation, controls a process of a base station, the process comprising:
a process of receiving information on power headroom in an uplink for a first frequency band among a plurality of frequency bands in communication using the plurality of frequency bands, the information being determined based on a transmission waveform for the first frequency band and a transmission waveform for a second frequency band of the plurality of frequency bands that is different from the first frequency band; and
a process of controlling uplink transmission based on the information on the power headroom.
